# NEUE EUROPÄISCHE PATENTSCHRIFT

(11) **EP 2 271 455 B2**
(45) Veröffentlichungstag und Bekanntmachung des Hinweises auf die Entscheidung über den Einspruch: **10.09.2014**
(45) Hinweis auf die Patenterteilung: 08.02.2012
(21) Anmeldenummer: 08873743.2
(22) Anmeldetag: 16.12.2008
(51) Int. Cl.: B23F 1/00, B23F 23/12, B23Q 1/54

(54) **BEARBEITUNGSKOPF**
MACHINING HEAD
TETE D'USINAGE

(30) Priorität: 31.03.2008 DE 102008016497
(43) Veröffentlichungstag der Anmeldung: 12.01.2011
(73) Patentinhaber: LIEBHERR-VERZAHNTECHNIK GmbH, 87437 Kempten (DE)
(72) Erfinder: ZELLER, Thomas, 87437 Kempten (DE)
(74) Vertreter: Laufhütte, Dieter
(86) Internationale Anmeldenummer: PCT/EP2008/010718
(87) Internationale Veröffentlichungsnummer: WO 2009/121387

(56) Entgegenhaltungen:
- DE-A1- 19 850 603
- JP-A- 2006 205 393
- JP-A- 2008 037 044
- US-A- 5 584 621
- US-A1- 2005 081 351

## Beschreibung

Die Erfindung betrifft eine Verzahnungsfräs- und Verzahnungsschleifmaschine, nach dem Oberbegriff des Anspruchs 1 (EP 0 282 046 A2).

Bei herkömmlichen Bearbeitungsmaschinen, wie mehrfunktionellen Werkzeugmaschinen, beispielsweise Verzahnungsfräs- und Verzahnungsschleifmaschinen, ist die mehrachsige Bewegung und Drehung der Frässpindel und des Spindelkopfes durch entfernt angeordnete Motoren gesteuert, die Synchronriemen, Schneckenantriebe und Räder, Kegelgetriebe und Stirnrädergetriebe oder Kegelgetriebe, die funktional mit der Spindel und dem Spindelkopf zur Rotation der Spindel und des Spindelkopfs um zwei Achsen gekoppelt sind, einzeln oder in Kombination verwenden (vgl. beispielsweise U.S.-A 5 257 883).

Aus der EP 0 885 081 B2, die zur Patentfamilie der US 5 584 621 A gehört, ist es bereits bekannt, einen Zweiachsen-Drehkopf für eine Werkzeugmaschinenspindel ohne Vorsehen eines Getriebes direkt anzutreiben.

Die DE 198 50 603 A1 beschreibt eine Fräskopfeinheit, die aufgrund der kardanischen Lagerung der Frässpindel Direktantriebe sowohl für die Frässpindel als auch für die Schwenkachsen der kardanischen Lagerung vorsieht.

Die US 2005/0081251 A1 betrifft eine Maschine zur Produktion einer Kurbelwelle, die jeweils einen Torquemotor pro Werkzeugspindel aufweist.

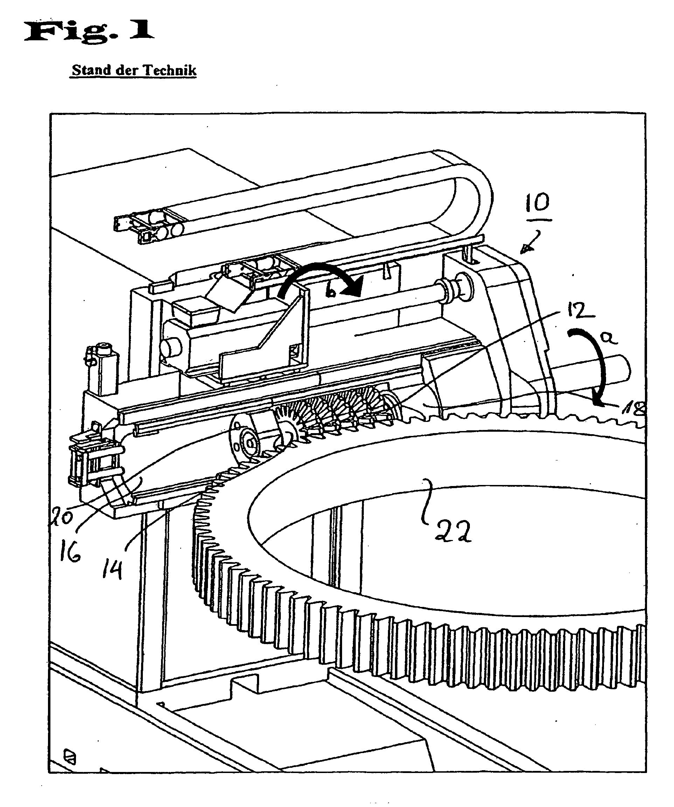

Eine derartige Bearbeitungsmaschine zur Bearbeitung von Verzahnungen nach dem Stand der Technik ist beispielhaft in Figur 1 dargestellt.

In der Figur 1 ist eine Verzahnungsfräsmaschine 10 schematisch dargestellt, in der als Bearbeitungskopf ein Fräswerkzeug 12 auf einer Spindel 14 in einem Bearbeitungskopfbett 16 gelagert ist. Dabei wird das Fräswerkzeug 12 von einem aus einem Elektromotor 18 über einen Getriebezug angetrieben, der auf einer Seite des Außenfräskopfes im Bearbeitungskopfbett 16 angeordnet ist. Die andere Seite der Spindel 14 wird von einem Gegenlager 20, der ebenfalls im Bearbeitungskopfbett angeordnet ist, abgestützt. Das Fräswerkzeug 12 dient zur Bearbeitung einer Außenverzahnung eines Werkstücks 22, das in der Figur 1 nur schematisch gezeigt ist. Die das Fräswerkzeug 12 tragende Spindel 14 wird in Pfeilrichtung a angetrieben. Sie kann in Pfeilrichtung b verschwenkt werden, um gegebenenfalls Schrägverzahnungen fertigen zu können.

Die Aufgabe der vorliegenden Erfindung besteht darin, einen Bearbeitungskopf für Bearbeitungsmaschinen an die Hand zu geben, der sich insbesondere zur Verwendung auf Großmaschinen eignet und trotz gegebenenfalls hoher Drehmomentanforderungen vergleichsweise klein baut.

Erfindungsgemäß wird diese Aufgabe durch die Kombination der Merkmale des Anspruchs 1 gelöst. Aufgrund dieser Lösung ist ein doppeltes oder mehrfaches Drehmoment verfügbar, so dass das Bauvolumen des Antriebs abnimmt. Es kann also ein kleinerer Durchmesser der Motoren bei verdoppeltem oder vervielfachtem Drehmoment realisiert werden.

Bevorzugte Ausgestaltungen der Erfindung ergeben sich aus den sich an den Hauptanspruch anschließenden Unteransprüchen.

Demnach können die Motoren im Master-Slave-Betrieb ansteuerbar sein. Alternativ ist auch eine synchrone Ansteuerung möglich.

Gemäß der Erfindung sind die Motoren im Schlitten des Bearbeitungskopfes, d. h. also im Bearbeitungskopfbett, verschiebbar und klemmbar angeordnet. Hierdurch ist die Werkzeugdornlänge an den zu bearbeitenden Durchmesser des Werkstück anpaßbar.

Weitere Merkmale, Einzelheiten und Vorteile der Erfindung ergeben sich aus einem in der Zeichnung dargestellten Ausführungsbeispiel. Es zeigen:
- Figur 1:: eine Bearbeitungsmaschine mit einem Bearbeitungskopf nach dem Stand der Technik,
- Figuren 2 bis 4:: erfindungsgemäße Bearbeitungsköpfe in unterschiedlichen Konfigurationen,
- Figur 5:: einen erfindungsgemäßen Bearbeitungskopf im Eingriff mit einem Werkstück,
- Figur 6:: eine Darstellung des Bearbeitungskopfes gemäß Figur 5 im Eingriff mit einem entsprechend größeren Werkstück,
- Figuren 7 und 8:: einen nicht zur Erfindung gehörenden Innenfräskopf und
- Figur 9:: einen ebenfalls nicht zur Erfindung gehörenden Innenschleifkopf.

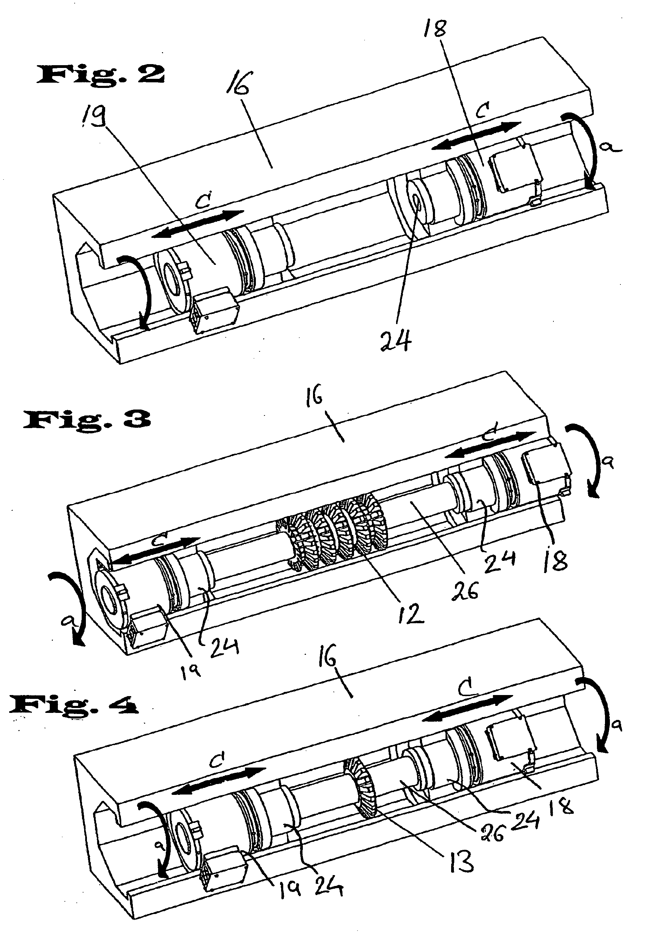

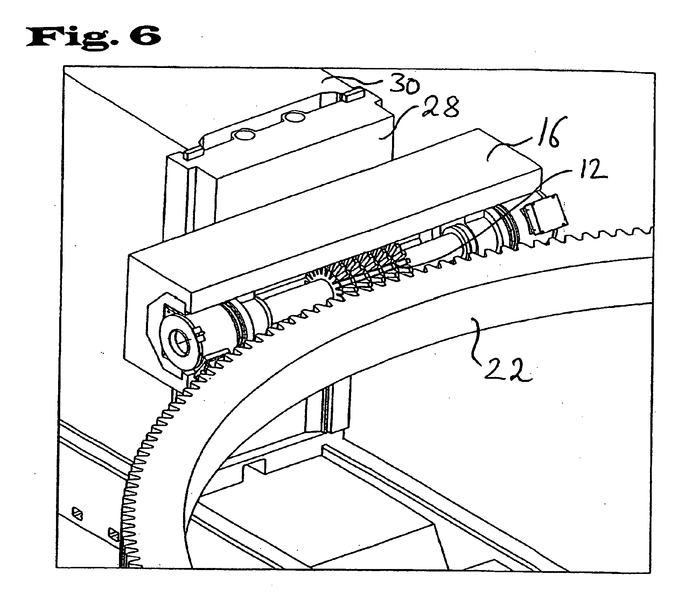

In Figur 2 ist ein Teil einer Bearbeitungsmaschine 10 gemäß Figur 1 in der erfindungsgemäßen Ausbildung des Bearbeitungskopfes dargestellt. Dieser weist ein Bearbeitungskopfbett 16 auf, das von seiner Konstruktion und Anordnung demjenigen gemäß dem Stand der Technik entspricht. In diesem bekannten Bearbeitungskopfbett 16 ist entsprechend der vorliegenden Erfindung der Antrieb aus zwei Motoren 18 und 19 gebildet, die jeweils beidseitig des in der Figur 2 nicht näher dargestellten Werkzeuges angeordnet sind. Unmittelbar an die Motoren 18 und 19 sind Werkzeugaufnahmen 24 angeflanscht. Die Motoren 18 und 19 können innerhalb des Bearbeitungskopfbettes 16 in Richtung der Doppelpfeile c verschoben und an einer gewünschten Position bei Bedarf durch Klemmung festgelegt werden. Ansonsten wird durch Verschiebung der beiden Motoren die Funktion der Shiftachse realisiert. Hierdurch lassen sich unterschiedliche Werkzeuge von der Werkzeugaufnahme 24 der Motoren 18 und 19 aufnehmen. Beispielhaft sind in den Figuren 3 und 4 unterschiedliche Werkzeuge dargestellt. Bei der Ausführungsform gemäß Figur 3 ist auf einem Dorn, der zwischen Werkzeugaufnahmen 24 der Motoren 18 und 19 aufgenommen ist, ein Wälzfräser 12 angeordnet. In dieser Ausführungsform sind die beiden Motoren 18 und 19 sehr weit auseinandergeschoben und in dieser Position durch Klemmung festgelegt. Diese Ausführungsvariante entspricht der Darstellung in Figur 6, wo das Bearbeitungskopfbett 16 an einem Schlitten 28 angeordnet ist, der entlang der Maschinenhalterung 30 verfahrbar ist. Der Wälzfräser 12 dient hier zur Bearbeitung eines Werkstücks 22 mit großem Durchmesser. Es handelt sich um die Herstellung einer entsprechenden Außenverzahnung.

In der Figur 4 ist dagegen der Abstand zwischen den Motoren 18 und 19 vergleichsweise geringer. Hier ist von den Werkzeugaufnahmen 24 ein Dorn mit einem Scheibenfräser 13 aufgenommen.

In den Figuren 2 bis 4 ist die Drehrichtung der Motoren 18 und 19 und damit des Werkzeugs, beispielsweise des Wälzfräsers 12 in Figur 3 oder des Scheibenfräsers 13 in Figur 4, durch die Pfeilrichtung a angegeben.

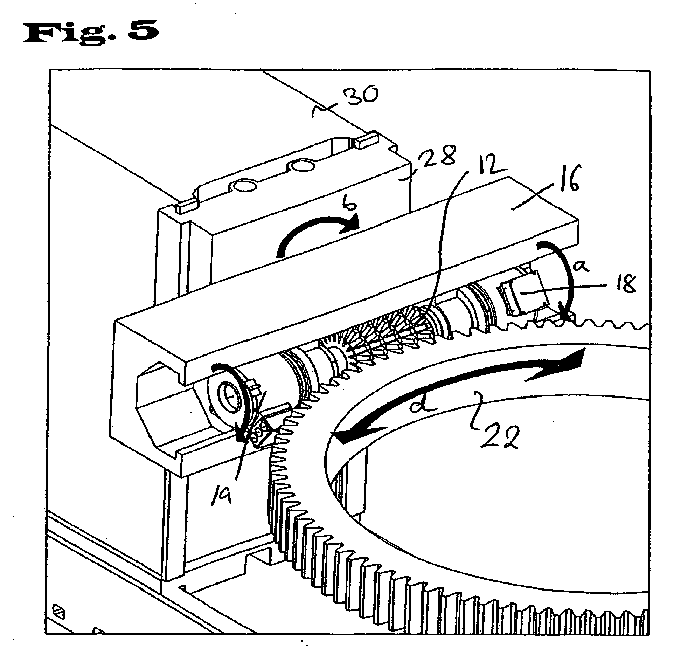

In Figur 5 ist eine Einstellung des Bearbeitungskopfs der vorliegenden Erfindung gezeigt, in welcher ein Werkstück 22 mit kleinerem Durchmesser bearbeitet wird. Hierzu ist ein Wälzfräser 12 zwischen den Motoren 18 und 19 eingespannt, wobei die Einspannlänge des Dorns 26, auf dem der Wälzfräser 12 aufgebracht ist, vergleichsweise kürzer ist als derjenige in Figur 6, mit welchem ein Werkstück 22 mit größerem Durchmesser bearbeitet wurde. Mit dem Doppelpfeil d ist die Drehrichtung des Werkstücks 22 angedeutet. Der Schwenkpfeil b zeigt die Möglichkeit der Verschwenkung des Bearbeitungskopfbettes an, wodurch eine Schrägverzahnung am Werkstück 22 herstellbar ist.

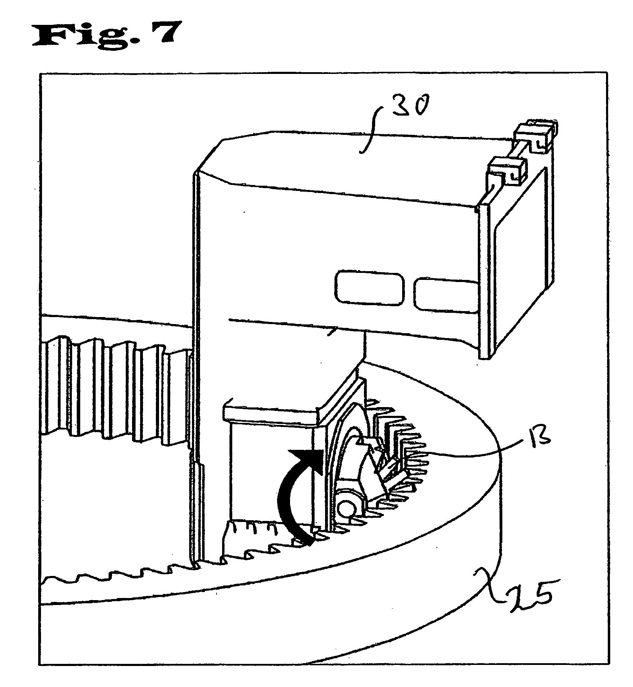

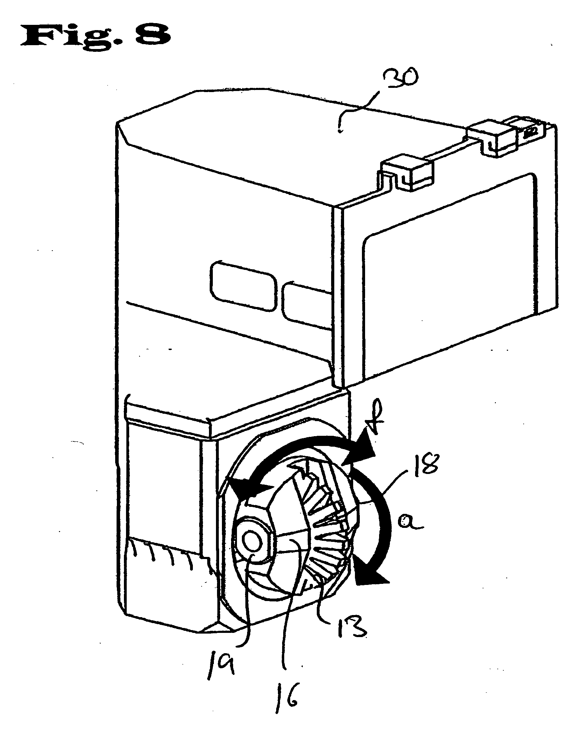

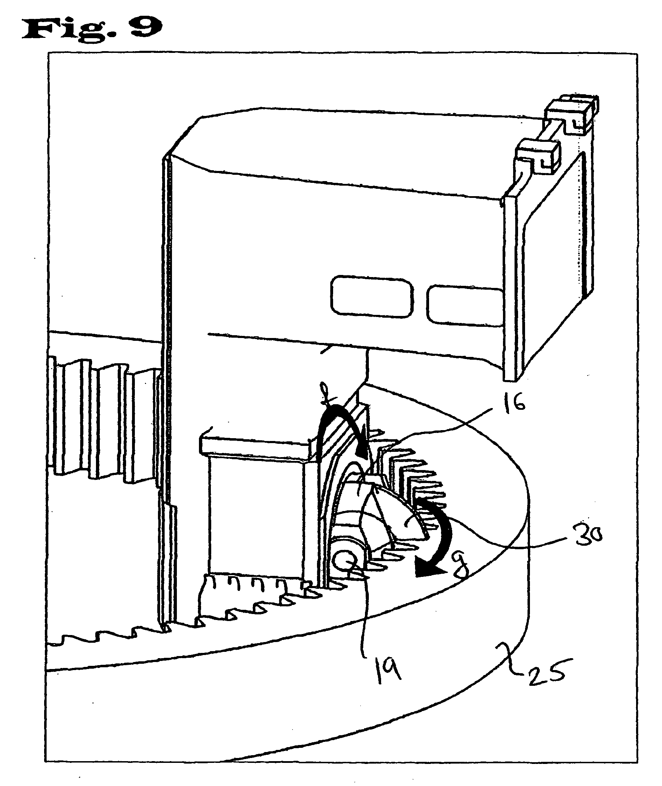

In den Figuren 7 bis 9 wird eine andere nicht zur Erfindung gehörige Ausgestaltung eines Bearbeitungskopfes erläutert. Es handelt sich hier um einen Bearbeitungskopf zur Bearbeitung der Innenverzahnung eines Werkstücks 25, wie insbesondere anhand der Figuren 7 und 9 dargestellt. Die Anordnung beider Motoren innerhalb eines in dieser Ausführungsvariante sehr kurz bauenden Bearbeitungskopfbettes 16 (vgl. Figur 8) ermöglicht eine sehr kompakte Ausführung des Antriebs für den Scheibenfräser 18, der in Drehrichtung des Pfeils a in Figur 8 antreibbar ist. Seitlich in dem Bearbeitungskopfbett 16 sind die als Direktantriebe ausgebildeten Motoren 18 und 19 dargestellt, die vorteilhaft im Master-Slave-Betrieb betrieben werden können. Aufgrund des zweiseitigen Antriebs der beiden Motoren kann ein sehr hohes Drehmoment durch vergleichbar kleine Motoren verfügbar gemacht werden. Diese kompakte Ausführung kann insgesamt in dem Haltearm 30 in einer entsprechend dafür vorgesehenen Ausnehmung aufgenommen und dort schwenkbar gelagert sein, so dass hier über einen nicht dargestellten Schwenkmotor eine Schwenkung in Doppelpfeilrichtung f erfolgen kann. Dadurch wird die Bearbeitung von Schrägverzahnungen möglich, ohne dass hier der gesamte Haltearm 30 verschwenkt werden muß. Vielmehr liegt die Drehachse für den Innenfräser 13 zur Verschwenkung in Doppelpfeilrichtung f innerhalb des Bearbeitungskopfes. Hierdurch ist die Bearbeitung von Schrägverzahnungen wesentlich verbessert, da die Störkontur vermieden werden kann und da vergleichsweise kleinere Werkstückdurchmesser gerade bei breiten Innenverzahnungen bearbeitbar sind.

Der Eingriff des Scheibenfräsers 13 in das zu bearbeitende Werkstück 25 ist in Figur 7 dargestellt. Die Figur 9 zeigt eine alternative Ausführungsvariante, in welcher eine Schleifscheibe 30 als Bearbeitungswerkzeug innerhalb des Bearbeitungskopfbettes 16 gelagert ist und von den mindestens zwei Motoren 18 und 19 antreibbar ist. Der gesamte Bearbeitungskopf ist kardanisch aufgehängt und in die Pfeilrichtung f bzw. g durch hier nicht näher dargestellte Verstellmotoren verschwenkbar.

Auch wenn der Bearbeitungskopf sich insbesondere zum Einsatz bei Großmaschinen eignet, kann dieser auch gewinnbringend bei vergleichsweise kleineren Maschinen eingesetzt werden. Durch die Montage der beiden Motoren im Bearbeitungskopfbett und die Festlegung durch Klemmung kann im Servicefall der Antrieb in Form der beiden festgeklemmten Motoren in einfacher Weise aus dem Bearbeitungskopfbett herausgezogen und gegen einen Ersatzeinschub getauscht werden.

## Patentansprüche

1. Verzahnungsfräs- und Verzahnungsschleifmaschine mit einem Bearbeitungskopf, der einen Direktantrieb (18, 19) zum Antreiben eines Bearbeitungswerkzeugs (12, 13) aufweist, wobei der Direktantrieb (18, 19) in einem Bearbeitungskopfbett (16) des Bearbeitungskopfes angeordnet ist,
**dadurch gekennzeichnet,**
**dass** der Direktantrieb (18, 19) zwei synchron miteinander ansteuerbare Motoren (18, 19) umfasst, die ein und dieselbe Achse (a) antreiben, wobei die Motoren (18, 19) beidseitig des Bearbeitungswerkzeugs im Bearbeitungskopfbett verschiebbar angeordnet und durch Klemmung festlegbar sind, wobei ansonsten durch die Verschiebung der beiden Motoren (18, 19) die Funktion der Shift-Achse realisierbar ist.

2. Verzahnungsfräs- und Verzahnungsschleifmaschine nach Anspruch 1, **dadurch gekennzeichnet, dass** die Motoren (18, 19) im Master-Slave Betrieb ansteuerbar sind.

3. Verzahnungsfräs- und Verzahnungsschleifmaschine nach einem der vorangegangenen Ansprüche, **dadurch gekennzeichnet, dass** einer der Motoren (18, 19) eine Längenkompensation zum Ausgleich von Wärmedehnungen im Werkzeugdorn besitzt.

4. Verzahnungsfräs- und Verzahnungsschleifmaschine nach einem der vorangegangenen Ansprüche, **dadurch gekennzeichnet, dass** der Bearbeitungskopf von außen an das Werkstück (22) anstellbar ist.

## Claims

1. A gear cutting and gear grinding machine comprising a machining head having a direct drive (18, 19) for driving a machining tool (12, 13), wherein the direct drive (18, 19) is arranged in a machining head bed (16) of the machining head,
**characterised in that**,
the direct drive (18, 19) comprises two motors (18, 19) which can be controlled synchronously with each other and which drive one and the same axle (a), wherein both motors (18, 19) are arranged displaceably in the machining head bed at either side of the machining tool and can be fixed by clamping, wherein otherwise the function of the shift axle is realised by displacement of the two motors (18, 19).

2. A gear cutting and gear grinding machine in accordance with claim 1, **characterised in that** the motors (18, 19) can be controlled in master-slave operation.

3. A gear cutting and gear grinding machine in accordance with one the preceding claims, **characterised in that** one of the motors (18, 19) has a length compensation for compensating thermal expansions in the tool mandrel.

4. A gear cutting and gear grinding machine in accordance with one of the preceding claims, **characterised in that** the machining head can be set to engage on the workpiece (22) from outside.

## Revendications

1. Fraiseuse à denture et meuleuse à denture, avec une tête d'usinage qui comprend un entraînement direct (18, 19) pour l'entraînement d'un outil d'usinage (12, 13), où l'entraînement direct (18, 19) est disposé dans un lit de tête d'usinage (16) de la tête d'usinage, **caractérisée en ce que** l'entraînement direct (18, 19) présente deux moteurs (18, 19) aptes à être commandés d'une manière synchrone l'un avec l'autre, qui entraînent un même axe (a), les moteurs (18,19) étant disposés de manière déplaçable de part et d'autre de l'outil d'usinage dans le lit de tête d'usinage et pouvant être fixés par serrage, le déplacement des deux moteurs (18, 19) permettant de réaliser la fonction d'axe Shift.

2. Fraiseuse à denture et meuleuse à denture selon la revendication 1, **caractérisée en ce que** les moteurs (18, 19) peuvent être commandés selon un mode maître/esclave.

3. Fraiseuse à denture et meuleuse à denture selon l'une des revendications précédentes, **caractérisée en ce que** l'un des moteurs (18, 19) possède une compensation de longueur pour égaliser des dilatations thermiques dans le mandrin d'outil.

4. Fraiseuse à denture et meuleuse à denture selon l'une des revendications précédentes, **caractérisée en ce que** la tête d'usinage est applicable depuis l'extérieur à la pièce (22).
